# EUROPÄISCHE PATENTSCHRIFT

(11) **EP 2 861 400 B1**
(45) Veröffentlichungstag und Bekanntmachung des Hinweises auf die Patenterteilung: **06.11.2019**
(21) Anmeldenummer: 13731062.9
(22) Anmeldetag: 13.06.2013
(51) Int. Cl.: F24D 11/00, F28D 20/00, F28D 21/00, B29C 35/00, F24D 19/10

(54) **VERFAHREN ZUM UMTEMPERIEREN VON OBJEKTEN**
PROCESS TO CHANGE THE TEMPERATURE OF AN OBJECT
PROCÉDÉ POUR CHANGER LA TEMPÉRATURE D'UN OBJET

(30) Priorität: 15.06.2012 DE 102012011909
(43) Veröffentlichungstag der Anmeldung: 22.04.2015
(73) Patentinhaber: Messer Group GmbH, 65812 Bad Soden (DE)
(72) Erfinder: HERZOG, Friedhelm, 47803 Krefeld (DE); BÖCKLER, Thomas, 46117 Oberhausen (DE); HERTRAMPF, Joachim, 49497 Mettingen (DE)
(74) Vertreter: Münzel, Joachim R.
(86) Internationale Anmeldenummer: PCT/EP2013/062212
(87) Internationale Veröffentlichungsnummer: WO 2013/186287

(56) Entgegenhaltungen:
- GB-A- 2 061 484
- US-A- 2 713 252
- US-A- 3 259 175
- US-A- 3 525 098
- US-A- 3 556 201

## Beschreibung

Bei thermischen Batch- oder Chargenprozessen muss ein Produkt in einer vorgegebenen Zeit von einer Starttemperatur auf eine Solltemperatur aufgeheizt oder abgekühlt werden. In der Regel werden solche Prozesse zyklisch betrieben. Meist werden die entsprechenden Verbraucher, beispielsweise ein Werkzeug, durch ein Fluid als Wärmeträger beheizt und gekühlt. Typische Wärmeträgermedien sind Wärmeträgeröl, Wasser, Sole, Stickstoff, Edelgase oder Luft. Beispiele für solche Prozesse sind etwa das Aufheizen einer Presse zur Herstellung von laminierten Kunststoffplatten (Kreditkarten, Leiterplatten), das Aufheizen oder Abkühlen von Behältern mit chemischen oder pharmazeutischen Produkten oder das Aufheizen oder Abkühlen von Lebensmitteln oder das Aufheizen oder Abkühlen von Metallprodukten.

Beispielsweise ist aus der DE 196 30 134 A1 ein Fügeverfahren für ElektronikBaugruppen bekannt, welches einen thermischen Chargenprozess beschreibt, bei dem eine Leiterplatte zwecks Verlötung in einer vorgegebenen Zeit von einer Starttemperatur auf eine Solltemperatur von ca. 305°C aufgeheizt, verlötet und anschließend auf eine Temperatur unterhalb der Schmelztemperatur des Lotes (298°C) abgekühlt wird. Der Lötvorgang spielt sich dabei bei einem Druck zwischen 0,1 mbar und 10 mbar ab. Als Wärmeträger wird hierbei ein inertes Prozessgas, beispielsweise Stickstoff oder ein Edelgas, verwendet.

Eine andere Anwendungsmöglichkeit betrifft die Produktion von Trockeneis. Hierbei muss flüssiges Kohlendioxid auf eine Temperatur unterhalb seines Schmelzpunkts von ca. -56,6°C gebracht werden, um festes Kohlendioxid zu erzeugen. Anschließend wird die Apparatur auf eine Temperatur oberhalb des CO₂-Schmelzpunktes erwärmt und ein Ablösen der erzeugten Trockeneisteilchen von der Apparatur zu erleichtern.

Andere Anwendungen betreffen Apparaturen, deren normale Betriebstemperatur unterhalb von 0°C liegen. Hier soll aus Wartungsgründen, insbesondere zur Beseitigung von Wassereisbildungen, die Apparatur in kurzer Zeit auf Werte über 0°C erwärmt und nach Durchführung der Arbeiten rasch wieder auf Betriebstemperatur gebracht werden.

Aus der DE 103 58 161 B4 ist eine Vorrichtung und ein Verfahren zur Aufheizung und Abkühlung eines Verbrauchers bekannt, bei dem ein Objekt (Verbraucher) zum Temperieren an ein von einem Wärmeträgermedium im Kreislauf durchströmtes Leitungsnetzwerk angeschlossen ist. Mittels einer geeigneten Schaltung des Leitungsnetzwerks, bei dem das Wärmeträgermedium vor seiner Zuführung an den Verbraucher entweder mit einer Heizeinrichtung oder einer Kühleinrichtung in thermischen Kontakt gebracht wird, kann der Verbraucher wahlweise erwärmt oder gekühlt werden. Ein zur Heiz- bzw. Kühleinrichtung parallel geschalteter, thermisch gut isolierter Zwischenwärmespeicher ermöglicht zudem die Speicherung eines Teils des vom Verbraucher abgehenden erwärmten oder gekühlten Fluids. Das zwischengespeicherte Fluid kann bei einer späteren Temperierung eingesetzt werden und erspart auf diese Weise einen Teil der zum Betrieb der Heizeinrichtung bzw. Kühleinrichtung erforderlichen Energie.

Nachteilig bei diesem System ist, dass der Zwischenwärmespeicher dann nicht wirksam eingesetzt werden kann, wenn der Verbraucher nach einer "warmen" Betriebsphase, vor der er unter Mitwirkung des Zwischenwärmespeichers aufgeheizt wurde, auf eine "kalte" Betriebsphase umgestellt werden soll und umgekehrt, von einer "kalten" auf eine "warme" Betriebsphase, sodass es zumindest für diese Fälle zu keiner Energieeinsparung durch den Zwischenwärmespeicher kommt.

Weiterhin sind aus der US 3 556 201 A und der US 3 259 175 A Vorrichtungen bekannt, bei denen ein Apparat, beispielsweise eine Presse oder eine Pressform, durch ein Medium abwechselnd gekühlt und beheizt wird, und bei denen Zwischenwärmespeicher zum Speichern des Mediums im warmen bzw. kalten Zustand zum Einsatz kommen.

Der Erfindung liegt daher die Aufgabe zu Grunde, ein Verfahren zu schaffen, bei dem ein Objekt umtemperiert (also von einem Betriebszustand bei tieferen Temperaturen auf einen Betriebszustand bei höheren
Temperaturen oder umgekehrt, von einem Betriebszustand bei höheren Temperaturen auf einen Betriebszustand bei tieferen Temperaturen) gebracht werden kann, wobei ein Teil der hierzu erforderlichen Energie aus den jeweils vorangegangenen Umtemperierungsprozess gewonnen werden kann.

Gelöst ist diese Aufgabe durch ein Verfahren mit den Merkmalen des Patentanspruchs 1.

Eine Vorrichtung zum Temperieren eines Objekts zur Durchführung des erfindungsgemäßen Verfahrens ist dadurch gekennzeichnet, dass in das Leitungsnetzwerk mindestens ein zweiter Wärmespeicher zum Speichern von thermischer Energie integriert ist, der im Betrieb der Vorrichtung auf einer niedrigeren Betriebstemperatur als der erste Wärmespeicher haltbar ist.

Eine solche Vorrichtung wird aber nicht beansprucht.

Im Betrieb der Vorrichtung liegt in einem ersten Wärmespeicher eine Mindesttemperatur T₁ vor, die stets höher als die Höchsttemperatur T₂ in einem zweiten Wärmespeicher; der erste Wärmespeicher fungiert somit als "Warmspeicher", der zweite Wärmespeicher als "Kaltspeicher". Weiterhin sind im Leitungsnetzwerk Armaturen vorgesehen, mittels denen der Strömungsweg des Wärmeträgermediums im Leitungsnetzwerk verändert werden kann. Die Temperaturen werden an geeigneten Messfühlern in den Wärmespeichern und/oder im Leitungsnetzwerk strömungstechnisch vor und/oder hinter dem Objekt erfasst und auf Anzeigeinstrumenten angezeigt und/oder können einer Steuereinheit übermittelt werden, die auch für die Ansteuerung der Armaturen im Leitungsnetzwerk sorgt. Durch das Vorsehen mindestens zweier Wärmespeicher mit unterschiedlichen Betriebstemperaturen kann sowohl Heizenergie beim Aufwärmen des Objekts, als auch Energie, die zum Abkühlen des Objekts erforderlich ist, zumindest teilweise eingespart werden.

Der Temperaturbereich, bei dem die Erfindung zum Einsatz kommen kann, ist nahezu beliebig und hängt lediglich von der jeweiligen Temperierungsaufgabe ab. So kann T₁ und/oder T₂ in Kälteanwendungen unter minus 100°C betragen oder in Hochtemperaturanwendungen zwischen 100°C und 400°C. Ebenso hängt die Temperaturdifferenz ΔT = T₁ - T₂ von der jeweiligen Aufgabe ab und kann zwischen einem Wert von ΔT ≤ 1 K und beispielsweise ΔT =200 K betragen. Für die eingangs erwähnten Lötanwendungen beispielsweise liegt T₁ oberhalb der Schmelztemperatur des eingesetzten Lots, also etwa bei 305°C bis 320°C, T₂ liegt dagegen unterhalb der Schmelztemperatur des Lots, also beispielsweise bei 280°C bis 300°C. Zur zeitweiligen Aufheizung eines bei tiefen Temperaturen arbeitenden Werkzeugs, beispielsweise einer Apparatur zur Herstellung von Trockeneis, liegt T₁ dagegen beispielsweise oberhalb der CO₂-Schmelztemperatur von -56,6°C oder sogar oberhalb von 0°C, und T₂ unterhalb der CO₂-Schmelztemperatur.

Eine Höchsttemperatur im Warmspeicher oder eine Mindesttemperatur im Kaltspeicher kann, muss jedoch nicht vorgegeben sein; bei Einsatz von mehr als zwei Wärmespeichern ist es jedoch sinnvoll, für jeden der Wärmespeicher ein Temperaturintervall vorzugeben, innerhalb dessen der jeweilige Wärmespeicher angeschlossen wird. In jedem der Wärmespeicher wird in diesem Fall Wärme innerhalb eines bestimmten, vorgegebenen Temperaturintervalls gespeichert, wobei die vorgegebenen Temperaturintervalle zweckmäßigerweise aneinander anschließen. Beim Kühlen oder Heizen des Objekts wird dann jeweils eine Strömungsverbindung zwischen Objekt und demjenigen Wärmespeicher hergestellt, in dessen vorgegebenem Temperaturintervall die Temperatur des Wärmeträgermediums am Ausgang des Objekts liegt. Unter- bzw. überschreitet die Temperatur des Wärmeträgermediums die Intervallgrenzen, wird der Wärmespeicher abgekoppelt und eine Strömungsverbindung mit demjenigen Wärmespeicher hergestellt, in dessen Temperaturintervall sich das Wärmeträgermedium nunmehr befindet

Die Wärmespeicher können parallel zum oder in Serie zum Objekt sowie der Heizeinrichtung bzw. der Kühleinrichtung angeordnet sein, die Serienschaltung ist jedoch bevorzugt. Im Leitungsnetzwerk sind dabei die Wärmespeicher jeweils - beim Heizen des Objekts - in Serie zum Objekt und zur Heizeinrichtung oder - beim Kühlen des Objekts - in Serie zum Objekt und der Kühleinrichtung schaltbar. Diese Ausgestaltungen ermöglichen es, dass das Wärmeträgermedium von einem ersten Wärmespeicher über die Heizeinrichtung (bzw. Kühleinrichtung) und dem Objekt und von dort gegebenenfalls zu einem zweiten Wärmespeicher fließen kann, wobei das Wärmeträgermedium zu Beginn des Vorgangs Kälte (oder Wärme) vom Objekt aufnimmt und dem Wärmespeicher zwecks Speicherung zuführt.

Die serielle Schaltung ermöglicht eine schnelle Temperierung des Objekts mit Hilfe der Wärmespeicher. Die Wärmespeicher erhalten ihre Betriebstemperatur beim ersten Heizen bzw. Kühlen des Objekts. Beim ersten Kühlen wird dazu im Leitungsnetzwerk eine Strömungsverbindung zwischen Kühleinrichtung, Objekt und erstem Wärmespeicher (im folgenden auch: "Kaltspeicher") hergestellt, wodurch mittels der Kühleinrichtung sowohl das Objekt als auch der Kaltspeicher gekühlt wird, und zwar zumindest so lange, bis im Kaltspeicher eine vorgegebene Höchsttemperatur von T₂ unterschritten wird. Beim ersten Heizen wird im Leitungsnetzwerk eine Strömungsverbindung zwischen Heizeinrichtung, Objekt und zweitem Wärmespeicher (im folgenden auch "Warmspeicher") hergestellt, wodurch mittels der Heizeinrichtung sowohl das Objekt als auch der Warmspeicher erwärmt wird, und zwar zumindest so lange, bis im Warmspeicher eine vorgegebene Mindesttemperatur von T₁ überschritten wird. Somit besteht im ersten Wärmespeicher eine minimale Temperatur T₁ und im zweiten Wärmespeicher eine maximale Temperatur T₂. Die Temperaturen T₁ und T₂ sind dabei frei wählbar, jedoch sollte T₂ ≤ T₁ gelten.

Beim Kühlen des zuvor auf eine Temperatur T > T₁ erwärmten Objekts ist es so möglich, die niedrige Temperatur im Kaltspeicher zu nutzen, um zur Kühlung des Objekts zumindest beizutragen, indem durch eine entsprechende Schaltung des Leitungsnetzwerks eine Strömungsverbindung zwischen dem Kaltspeicher und dem Objekt hergestellt wird. Das aus dem Kaltspeicher entnommene kalte oder durch Wärmetausch mit einem im Kaltspeicher vorliegenden kalten Medium abgekühlte Wärmeträgermedium wird dem Objekt mittels der Fördereinrichtung zugeführt und kühlt dieses ab. Da zumindest zu Beginn des Kühlvorgangs noch eine beträchtliche Wärmemenge im Objekt vorhanden ist, ist es zweckmäßig, zu Beginn der Kühlphase zugleich eine Strömungsverbindung zwischen dem Objekt und dem Warmspeicher herzustellen. Im Verlauf des Kühlvorgangs kühlt sich das Objekt weiter ab, die Temperatur des Wärmeträgermediums stromab zum thermischen Kontakt mit dem Objekt sinkt und damit auch die Temperatur im Warmspeicher. Sinkt die Temperatur im Warmspeicher unter den Wert T₁, wird die Strömungsverbindung zwischen Objekt und dem Warmspeicher getrennt, um den Warmspeicher nicht weiter abzukühlen.

Beim Heizen des zuvor auf eine Temperatur von T < T₂ abgekühlten Objekts ist es möglich, die hohe Temperatur des Warmspeichers zu nutzen, um zumindest zur Heizung des Objekts beizutragen, indem durch eine entsprechende Schaltung des Leitungsnetzwerks eine Strömungsverbindung zwischen dem Warmspeicher und dem Objekt hergestellt wird. Das aus dem Warmspeicher entnommene warme oder durch Wärmetausch mit einem im Warmspeicher vorliegenden warmen Medium erwärmte Wärmeträgermedium wird dem Objekt mittels der Fördereinrichtung zugeführt und heizt dieses auf. Da zumindest zu Beginn des Heizvorgangs noch eine beträchtliche Wärmemenge dem Objekt zugeführt und dabei die Temperatur des Wärmeträgermediums abgesenkt wird, ist es zweckmäßig, zu Beginn der Heizphase gleichzeitig eine Strömungsverbindung zwischen dem Objekt und dem Kaltspeicher herzustellen, um damit den Kaltspeicher auf einer niedrigen Temperatur zu halten oder zu bringen. Im Verlauf des Heizvorgangs wärmt sich jedoch das Objekt auf, die Temperatur des Wärmeträgermediums stromab zum thermischen Kontakt mit dem Objekt steigt und damit auch die Temperatur im Kaltspeicher. Steigt die Temperatur im Kaltspeicher über den Wert von T₂, wird die Strömungsverbindung zwischen Objekt und dem Kaltspeicher unterbrochen, um den Kaltspeicher nicht weiter aufzuwärmen.

Alternativ kann anstelle der Temperatur im jeweiligen Wärmespeicher auch die Temperatur des Wärmeträgermediums nach dem thermischen Kontakt mit dem Objekt als Kriterium herangezogen werden, um die Strömungsverbindung mit dem Wärmespeicher herzustellen oder zu unterbrechen. In diesem Fall wird die Strömungsverbindung mit dem ersten Wärmespeicher getrennt, sobald die Temperatur des Wärmeträgermediums nach dem Wärmeaustausch mit dem Objekt den Wert T₂ unterschreitet, bzw. die Strömungsverbindung mit dem zweiten Wärmespeicher getrennt, sobald die Temperatur des Wärmeträgermediums nach dem Wärmeaustausch mit dem Objekt den Wert T₂ überschreitet. Auf diese Weise ist gewährleistet, dass die Temperatur im Warmspeicher stets auf einem Wert T>T₁ und im Kaltspeicher stets auf einen Wert T < T₂ vorliegt, nimmt dafür jedoch in Kauf, dass dem Kaltspeicher nur eine geringere Menge an kaltem Wärmeträgermedium zugeführt wird, als zuvor beschriebenen vorgenannten Fall.

Auch Heizeinrichtung und Kühleinrichtung können im übrigen innerhalb des Leitungsnetzwerks seriell hintereinander angeordnet sein, solange durch eine entsprechende Steuerung gewährleistet ist, dass in Anhängigkeit von der jeweiligen Aufgabe nur das das jeweilige Element angeschaltet, das andere dagegen abgeschaltet ist.

Eine vorteilhafte Weiterbildung der Erfindung sieht vor, dass das Leitungsnetzwerk als geschlossenes Netzwerk konzipiert ist; es findet also in diesem Fall grundsätzlich kein Zu- oder Abfluss von Wärmeträgermedium von bzw. nach außen statt. Im Betrieb der Vorrichtung strömt das Wärmeträgermedium entweder innerhalb des Leitungsnetzwerks im Kreislauf oder von einem ersten Wärmespeicher über das Objekt und der Heizeinrichtung (bzw. der Kühleinrichtung) zu einem zweiten Wärmespeicher.

Besonders vorteilhaft ist es, wenn im Leitungsnetzwerk eine zuschaltbare Bypassleitung vorgesehen ist, mittels der das Wärmeträgermedium unter Umgehung von zumindest einem Wärmespeicher im Kreislauf führbar ist. Diese Ausgestaltung ermöglicht insbesondere das Umtemperieren des Objekts auch innerhalb solcher Temperaturbereiche, bei denen eine Zuführung oder Entnahme von Wärmeträgermedium an bzw. aus einem Wärmespeicher nicht sinnvoll ist oder ein Wärmespeicher bereits vollständig thermisch gesättigt ist. So wird insbesondere beim Kühlen (Heizen) eines zuvor auf einer Temperatur T mit T₁>T>T₂ vorliegenden Objekts keine Strömungsverbindung mit dem Warmspeicher (Kaltspeicher) hergestellt, sondern diese werden umgangen. Das Wärmeträgermedium wird in diesem Fall über die Bypassleitung direkt zur Kühleinrichtung (Heizeinrichtung) zurückgeführt. Ist im Falle der Kühlung die Temperatur am Ausgang des Objekts hinreichend niedrig (T<T₂) wird anstelle der Bypassleitung eine Strömungsverbindung zwischen Objekt und Kaltspeicher hergestellt, bis das Objekt auf seine Zieltemperatur abgekühlt ist. Ist im Falle der Heizung die Temperatur am Ausgang des Objekts hinreichend hoch (T<T₂) wird anstelle der Bypassleitung eine Strömungsverbindung zwischen Objekt und Warmspeicher hergestellt, bis das Objekt auf seine Zieltemperatur aufgeheizt ist.

Als bevorzugter erster und/oder zweiter Wärmespeicher kommt ein Fluidspeicher zum Einsatz, in dem Wärme mittels einer entsprechend temperierten Wärmeträgermediumsmenge speicherbar ist. Beim Fluidspeicher handelt es sich um einen Behälter, in dem eine bestimmte Menge des flüssigen oder gasförmigen Wärmeträgermediums bei der Betriebstemperatur des jeweiligen Wärmespeichers vorgehalten wird, um es insbesondere bei der Heizung oder Kühlung des Objekts zu nutzen. Wird etwa bei der Kühlung (Heizung) des Objekts Kälte (Wärme) benötigt, wird zumindest ein Teil des Wärmeträgermediums aus dem zweiten (ersten) Wärmespeicher entnommen und zwecks Kühlung (Heizung) dem Objekt zugeführt und anschließend - abhängig von seiner Temperatur nach dem Wärmetausch mit dem Objekt - dem ersten (zweiten) Wärmespeicher zugeführt, in einer Bypassleitung im Kreislauf zur Kühleinrichtung (Heizeinrichtung) rückgeführt oder dem zweiten (ersten) Wärmespeicher zugeführt. Die Menge an Wärmeträgermedium in dem jeweiligen Wärmspeicher, also der Füllstand in dem jeweiligen Behälter, ist somit variabel und richtet sich nach der Menge der zu speichernden Wärme bzw. Kälte. Bei Einsatz eines flüssigen Wärmeträgermediums führt die Zunahme/Abnahme der Menge im Wärmespeicher zu einer Erhöhung/Verringerung des Füllstandes an Wärmeträgermedium im jeweiligen Wärmespeicher; bei Einsatz eines Gases als Wärmeträgermedium führt die Zuführung/Entnahme von Wärmeträgermedium zu einer Erhöhung/Erniedrigung des Drucks im jeweiligen Wärmespeicher.

Alternativ oder ergänzend zum vorgenannten Fluidspeicher kommt als erster und/oder zweiter Wärmespeicher ein mit dem Wärmeträgermedium thermisch verbindbares Medium zum Einsatz. Beim Medium handelt es sich beispielsweise um Wasser, ein Gas oder ein mineralisches oder keramisches Speichermaterial. Beim Speichern von Wärme wird zumindest ein Teil der Wärme des - warmen - Wärmeträgermediums auf das Medium übertragen, beim Speichern von Kälte wird die Temperatur des Mediums an die Temperatur des - kalten - Wärmeträgermediums herangeführt.

Besonders vorteilhaft ist zudem der Einsatz von Latentwärmespeichern als erster und/oder zweiter Wärmespeicher. Dabei wird ein Teil der Wärmeenergie dazu genutzt, um eine Phasenumwandlung (flüssig-gasförmig; fest-flüssig oder fest gasförmig) im Wärmeträgermedium oder in einem mit dem Wärmeträgermedium thermisch verbundenen Medium herbeizuführen.

Als bevorzugtes Wärmeträgermedium kommt insbesondere Wasser, Sole, Wärmeträgeröl, Luft, Edelgas oder ein anderes Gas, beispielsweise Kohlendioxid oder Stickstoff, zum Einsatz.

In einer abermals vorteilhaften Ausgestaltung der Erfindung ist wenigstens ein erster Wärmespeicher als beheizbarer Warmspeicher und/oder wenigstens ein zweiter Wärmespeicher als kühlbarer Kaltspeicher ausgestaltet, die Heizeinrichtung und/oder die Kühleinrichtung ist also jeweils in wenigstens einem Wärmespeicher integriert. Auf diese Weise werden Wärmeverluste vermieden und die Lagertemperaturen des Wärmeträgermediums in den Wärmespeichern kann vor Beginn der Temperierung des Objekts individuell eingestellt werden.

Die Aufgabe der Erfindung wird durch ein Verfahren zum Temperieren eines Objekts mittels eines in einem Leitungsnetzwerk geführten Wärmeträgermediums gelöst, in welches Leitungsnetzwerk eine Fördereinrichtung zum Fördern des Fluids, eine Heizeinrichtung und eine Kühleinrichtung zum Heizen bzw. Kühlen des Wärmeträgermediums sowie ein erster Wärmespeicher und ein zweiter Wärmespeicher zum Speichern von thermischer Energie integriert ist, wobei beim erfindungsgemäßen Verfahren folgende Verfahrensschritte beim Kühlen bzw. Heizen ablaufen:
- Im ersten Wärmespeicher wird eine Mindesttemperatur T₁ und im zweiten Wärmespeicher eine Höchsttemperatur T₂ aufrecht erhalten, mit T₁ ≥ T₂, und
- beim Kühlen des zuvor mittels der Heizeinrichtung auf eine Temperatur von T > T₁ aufgeheizten Objekts wird im Leitungsnetzwerk eine Strömungsverbindung zwischen der Kühleinrichtung, dem Objekt und dem ersten Wärmespeicher hergestellt, wobei das beim Durchlaufen der Kühleinrichtung gekühlte und beim thermischen Kontakt mit dem Objekt sich erwärmende Wärmeträgermedium so lange in thermischen Kontakt mit dem ersten Wärmespeicher gebracht wird, bis die Temperatur T₁ im ersten Wärmespeicher unterschritten wird, anschließend wird die Strömungsverbindung zum ersten Wärmespeicher unterbrochen, und/oder
- beim Heizen des zuvor mittels der Kühleinrichtung auf eine Temperatur von T < T₂ abgekühlten Objekts wird im Leitungsnetzwerk eine Strömungsverbindung zwischen der Heizeinrichtung, dem Objekt und dem zweiten Wärmespeicher hergestellt, wobei das beim Durchlaufen der Heizeinrichtung erwärmte und beim thermischen Kontakt mit dem Objekt sich abkühlende Wärmeträgermedium so lange in thermischen Kontakt mit dem zweiten Wärmespeicher gebracht wird, bis die Temperatur T₂ im zweiten Wärmespeicher überschritten wird, anschließend wird die Strömungsverbindung zum zweiten Wärmespeicher unterbrochen.

Im ersten Wärmespeicher wird also eine Temperatur von mindestens T₁ aufrecht erhalten, im zweiten Wärmespeicher eine Temperatur von höchstens T₂. Noch allgemeiner ausgedrückt werden die Wärmespeicher so betrieben, dass am Ausgang des jeweiligen Wärmespeichers Wärmeträgermedium mit der Temperatur von mindestens T₁ bzw. höchstens T₂ entnommen werden kann. Die Temperaturen T₁ und T₂ werden den jeweiligen Anforderungen entsprechend gewählt. Bei der Kühlung (Heizung) eines warmen (kalten) Objekts ist zu Beginn ein beträchtlicher Wärmeüberschuss (Kälteüberschuss) im Objekt vorhanden, der nach dem erfindungsgemäßen Verfahren vom Wärmeträgermedium aufgenommen und im ersten (zweiten) Wärmespeicher zwischengelagert wird. Dabei kann die Temperatur im ersten (zweiten) Wärmespeicher sinken (steigen), was jedoch unproblematisch ist, sofern nur die insgesamt im ersten (zweiten) Wärmespeicher gelagerte Menge an Wärme (Kälte) steigt. Das beim thermischen Kontakt mit dem Objekt erwärmte (abgekühlte) Wärmeträgermedium wird also dazu genutzt, Wärme (Kälte) im ersten (zweiten) Wärmespeicher zu lagern, um diese später wiederzuverwenden.

Bei der ersten Inbetriebnahme einer nach dem erfindungsgemäßen Verfahren arbeitenden Apparatur ist es möglich, dass zunächst Objekt und die beiden Wärmespeicher auf der gleichen Temperatur vorliegen. Mit Beginn der Kühlung (Heizung) wird durch Herstellen einer Strömungsverbindung zwischen Kühleinrichtung (Heizeinrichtung), Objekt und zweitem (erstem) Wärmespeicher der zweite (erste) Wärmespeicher auf seine jeweilige Betriebstemperatur gebracht, also auf eine Temperatur T ≥ T₁ im ersten Wärmespeicher und T ≤ T₂ im zweiten Wärmespeicher. Je länger die Strömungsverbindung mit der Kühleinrichtung (Heizeinrichtung) aufrecht erhalten wird, desto tiefer (höher) ist die Temperatur im zweiten (ersten) Wärmespeicher. Die im zweiten (ersten) Wärmespeicher vorliegende Kälte (Wärme) kann anschließend für externe Kühlanwendungen (Heizanwendungen) eingesetzt werden oder aber zur späteren Kühlung (Heizung) des Objekts. Im letzteren Falle sieht eine vorteilhafte Ausgestaltung des erfindungsgemäßen Verfahrens vor, dass das Wärmeträgermedium vor dem thermischen Kontakt mit dem Objekt
- beim Kühlen des Objekts zwecks Zuführen von kaltem Wärmeträgermedium in thermischen Kontakt mit dem zweiten Wärmespeicher gebracht wird, um dem Objekt Kälte aus dem zweiten Wärmespeicher zuzuführen und/oder
- beim Heizen des Objekts zwecks Zuführen von warmem Wärmeträgermedium in thermischen Kontakt mit dem ersten Wärmespeicher gebracht wird, um dem Objekt Wärme aus dem ersten Wärmespeicher zuzuführen.

Die Übertragung der Wärme bzw. Kälte erfolgt dabei jeweils nach Herstellung einer entsprechenden Strömungsverbindung zwischen dem jeweiligen Wärmespeicher und dem Objekt im Leitungsnetzwerk durch das Wärmeträgermedium.

Um einen besonders effizienten Umgang mit Energie zu erreichen, ist es vorteilhaft, dass
- beim Kühlen des Objekts nach Unterbrechen der Strömungsverbindung zum ersten Wärmespeicher eine Strömungsverbindung zum zweiten Wärmespeicher hergestellt und das durch den Wärmetausch mit dem Objekt abgekühlte Wärmeträgermedium dem zweiten Wärmespeicher zugeführt wird wird und/oder
- beim Heizen des Objekts nach Unterbrechen der Strömungsverbindung zum zweiten Wärmespeicher eine Strömungsverbindung zum ersten Wärmespeicher hergestellt und das durch den Wärmetausch mit dem Objekt erwärmte Wärmeträgermedium dem ersten Wärmespeicher zugeführt wird.

Bei dieser Ausgestaltung der Erfindung wird somit die weitere Abkühlung (Aufheizung) des Objekts durch die Kühleinrichtung (Heizeinrichtung) dazu genutzt, die Wärmespeicher mit Kälte bzw. Wärme zu füllen. Zweckmäßigerweise erfolgt bei der Kühlung die Herstellung der Strömungsverbindung zum zweiten Wärmespeicher erst dann, wenn die Temperatur des Wärmeträgermediums nach dem thermischen Kontakt mit dem Objekt die Temperatur T₂ unterschreitet; bei der Heizung erfolgt die Herstellung der Strömungsverbindung zum ersten Wärmspeicher zweckmäßigerweise erst dann, wenn die Temperatur des Wärmeträgermediums nach dem thermischen Kontakt mit dem Objekt die Temperatur T₁ überschreitet. In der Zwischenzeit zwischen der Unterbrechung der Strömungsverbindung zum einen und der Herstellung der Strömungsverbindung zum anderen Wärmespeicher wird das Wärmeträgermedium in vorteilhafter Weise über eine Bypassleitung mittels der Fördereinrichtung im Kreislauf von Kühleinrichtung (Heizeinrichtung) und Objekt, unter Umgehung der Wärmespeicher, geführt, bis die Zieltemperatur (T₁ oder T₂) erreicht ist.

Anhand der Zeichnung soll ein Ausführungsbeispiel der Erfindung näher erläutert werden. In schematischen Ansichten zeigt:
- Fig. 1:: Das Schaltbild einer Vorrichtung zur Durchführung des erfindungsgemäßen Verfahrens in einer ersten Ausführungsform,
- Fig. 2 a-d:: Verschiedene Betriebszustände der Vorrichtung aus Fig. 1,
- Fig. 3:: Das Schaltbild einer anderen Vorrichtung zur Durchführung des erfindungsgemäßen Verfahrens,
- Fig. 4:: Das Schaltbild einer wieder anderen Vorrichtung zur Durchführung des erfindungsgemäßen Verfahrens.

Die in der Zeichnung gezeigte Vorrichtung 1 dient zum Temperieren eines Objekts 2 mittels eines in einem Leitungsnetzwerk 3 geführten flüssigen oder gasförmigen Wärmeträgermediums. In das Leitungsnetzwerk 3 integriert sind eine Heizeinrichtung 4, eine Kühleinrichtung 5, die jeweils Wärme in das Wärmeträgermedium eintragen bzw. aus diesem entnehmen, sowie ein erster Wärmespeicher (im Folgenden Warmspeicher 6) und eineinen zweiten Wärmespeicher (im Folgenden: Kaltspeicher 7). Der Vortrieb des Wärmeträgermediums im Leitungsnetzwerk 3 erfolgt mittels einer Fördereinrichtung 8, bei der es sich beispielsweise um eine Pumpe oder einen Kompressor handelt. Weiterhin sind im Leitungsnetzwerk Steuerventile 9a, 9b, 9c, 9d, 9e, 9f vorgesehen, mit deren Hilfe der Strömungsweg des Wärmeträgermediums im Leitungsnetzwerk 3 verändert werden kann.

Eine Bypassleitung 10, die mittels Stellventil 11 geöffnet bzw. geschlossen wird, ermöglicht - bei gleichzeitigem Schließen der Steuerventile 9e, 9f - die Herstellung eines Kreislaufs aus Kühleinrichtung 5 bzw. Heizeinrichtung 4 und dem zu temperierenden Objekt unter Umgehung des Kaltspeichers 7 bzw. Warmspeichers 6.

Die Ventile 9a, 9b, 9c, 9d, 9e, 9f, 11 sind, ebenso wie Temperatursensoren 12, 13 am - in Strömungsrichtung des Wärmeträgermediums gesehen - Eingangsbereich (Temperatursensor 12) und Ausgangsbereich (Temperatursensor 13) des Objekts 2, mit einer hier nicht gezeigten Steuereinheit datenverbunden, mittels der die jeweiligen Strömungswege des Wärmeträgermediums im Leitungsnetzwerk 3 in Abhängigkeit von der gemessenen Temperatur geregelt werden können. Eine hier im Übrigen nicht weiter interessierende Pendelgasleitung 14 sorgt für einen Druckausgleich zwischen Kaltspeicher 7 und Warmspeicher 6 für den Fall, dass ein flüssiges Wärmeträgermedium zum Einsatz kommt.

Bei der Heizeinrichtung 4 handelt es sich beispielsweise um eine elektrische Heizeinrichtung oder um einen Wärmetauscher, in dem das Wärmeträgermedium mit einem Heizmedium in direkten oder indirekten thermischen Kontakt gebracht wird. Bei der Kühleinrichtung 5 handelt es sich um eine konventionelle Kältemaschine (Kompressionskältemaschine oder Absorptionskältemaschine) oder um einen Wärmetauscher, bei dem das Wärmeträgermedium mit einem kalten Medium, beispielsweise ein kondensiertes Gas, wie flüssiger Stickstoff, in direkten oder indirekten thermischen Kontakt gebracht wird.

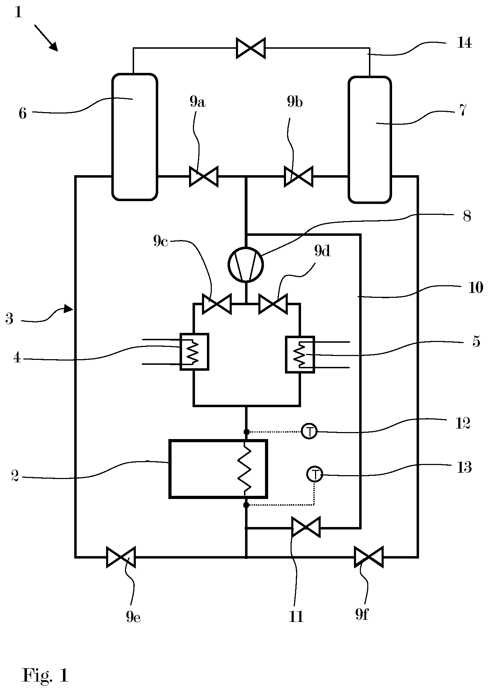

Im Ausführungsbeispiel nach Fig. 1 wird im Warmspeicher 6 und dem Kaltspeicher 7 das Wärmeträgermedium bei unterschiedlichen Temperaturen gelagert, wobei die Temperatur des im Warmspeicher 6 gelagerten Wärmeträgermediums gleich oder höher ist als eine Mindesttemperatur T₁ und die Temperatur des im Kaltspeicher 7 gelagerten Wärmeträgermediums gleich oder tiefer als eine Höchsttemperatur T₂ ist, wobei T₁> T₂ gelten soll.

Alternativ oder ergänzend zum Verwendung des Wärmeträgermediums als Speichermedium können im Warmspeicher 6 bzw. dem Kaltspeicher 7 im Übrigen Wärmespeicher jeder Art zum Einsatz kommen, wie etwa Speicher mit einem festen, flüssigen oder gelartigen Füllmedium arbeiten oder aber Latentwärmespeicher, in denen eine Phasenumwandlung des Wärmeträgermediums erfolgt und die zur Phasenumwandlung erforderliche Energie zur Speicherung der Wärme bzw. Kälte genutzt wird. Der Warmspeicher und der Kaltspeicher kann auch eine Kombination verschiedener, thermisch miteinander verbindbarer Speichertypen umfassen. Im Rahmen der Erfindung ist auch vorstellbar, das Wärmeträgermedium in unterschiedlichen Aggregatszuständen durch das Leitungsnetzwerk zu führen, also insbesondere im kalten, flüssigen Zustand zum Zwecke der Kühlung und im warmen gasförmigen Zustand zum Zwecke des Heizens. Ebenso kann die Verdampfungs- und/oder Schmelzenthalpie des Wärmeträgermediums selbst zur Wärmespeicherung im Kaltspeicher genutzt werden, indem beispielsweise das Wärmeträgermedium im Kaltspeicher in flüssiger Form gelagert und bei der Abkühlen des Objekts ganz oder teilweise verdampft wird, oder umgekehrt, das im Warmspeicher im gasförmigen Zustand gespeicherte Wärmeträgermedium beim Aufwärmen des Objekts ganz oder teilweise kondensiert wird. Weiterhin ist es vorstellbar, die Kühleinrichtung in den Kaltspeicher und/oder die Heizeinrichtung in den Warmspeicher zu integrieren.

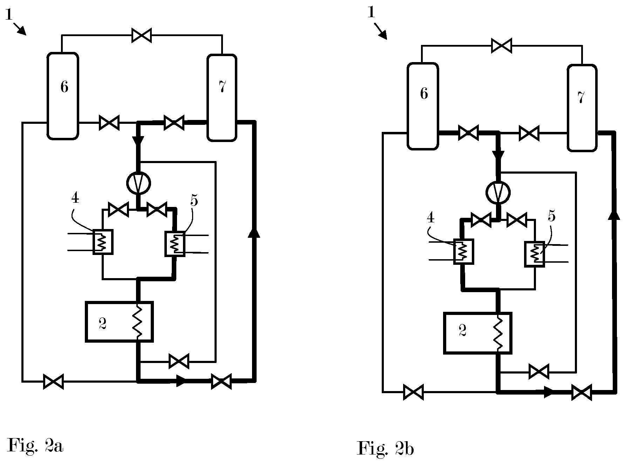

In den Fig. 2a bis 2d sind verschiedene Betriebszustände der Vorrichtung 1 dargestellt.

In Fig. 2a findet eine Kühlung des Objekts 2 und des im Kaltspeicher 7 gelagerten Wärmeträgermediums mittels der Kühleinrichtung 5 statt. Mittels der hier nicht gezeigten Steuereinrichtung erfolgt die Kühlung des Objekts auf einen vorgegebenen oder einprogrammierten Temperaturwert, dessen Vorliegen durch Abgleich der an den Temperatursensoren 12, 13 gemessenen Werte festgestellt wird. Dieser Temperaturwert liegt unterhalb der maximalen Betriebstemperatur T₂ des Kaltspeichers 7, d.h. im Laufe des Kühlvorgangs kühlt sich der Kaltspeicher auf eine Temperatur von T<T₂ ab.

In der in Fig. 2b gezeigten Strömungsführung wird das - kalte - Objekt aufgewärmt. Dazu werden die Steuerventil 9a, 9c und 9f geöffnet und die Steuerventile 9b, 9d, 9e geschlossen. Das Wärmeträgermedium mit einer Temperatur T≥T₁ wird so aus dem Warmspeicher 6 über die Heizeinrichtung 4 zum Objekt 2 geführt. Durch den Wärmetausch mit dem aufgrund der vorherigen Kühlphase noch kalten Objekt 2 wird das Wärmeträgermedium stark abgekühlt. Das abgekühlte Wärmeträgermedium wird anschließend dem Kaltspeicher 7 zugeführt und füllt diesen auf, gleichzeitig sinkt der Füllstand im Warmspeicher 6. Im Falle eines flüssigen Wärmeträgermediums erfolgt über die Pendelleitung 14 ein Druckausgleich zwischen den Speichern 6, 7. Die allmähliche Erwärmung des Objekts 2 führt jedoch auch zu einer Erwärmung des Wärmeträgermediums und somit auch zu einer Erwärmung des Kaltspeichers 7. Überschreitet im Zuge der Zuführung des Wärmeträgermediums die Temperatur im Kaltspeicher 7 den Wert T₂, wird das Steuerventil 9f geschlossen und das Stellventil 11 geöffnet. Im weiteren Verlauf des Aufwärmvorgangs wird das Wärmeträgermedium die Bypassleitung 10 vom Objekt zur Heizeinrichtung 4 rückgeführt.

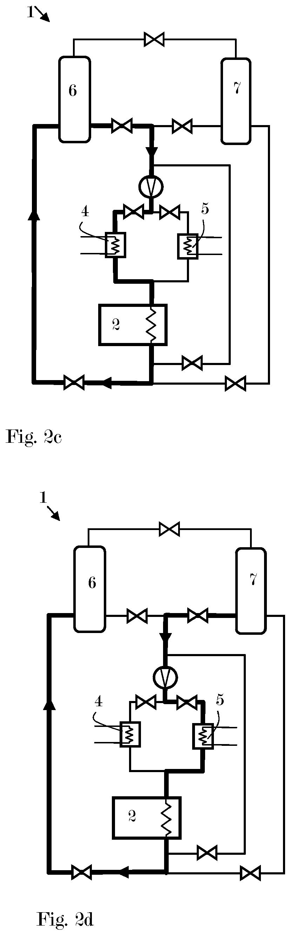

Überschreitet die Temperatur des Wärmeträgermediums am Temperatursensor 13 den Wert T₁ für die minimale Betriebstemperatur im Warmspeicher 6, wird das Stellventil 11 geschlossen und das Steuerventil 9e geöffnet, wie in Fig. 2c gezeigt. Das Wärmeträgermedium wird nun dem Warmspeicher 6 zugeführt und gelangt von dort wieder in den Kreislauf zurück. Nunmehr werden sowohl das Objekt 2 als auch der Warmspeicher 6 durch den Wärmeeintrag an der Heizeinrichtung 4 auf eine Temperatur T>T₁ aufgeheizt.

In Fig. 2d erfolgt eine abermalige Kühlung des Objekts 2. Dazu werden die Steuerventile 9a und 9c geschlossen und die Steuerventile 9b, 9d geöffnet. Das Steuerventil 9f bleibt geschlossen, das Steuerventil 9b bleibt geöffnet. Wärmeträgermedium aus dem Kaltspeicher 7 wird mit einer Temperatur T ≤ T₂ über die Kühleinrichtung 5 geführt und kühlt das Objekt 2, wobei sich das Wärmeträgermedium entsprechend aufheizt. Das erwärmte Wärmeträgemedium wird dem Warmspeicher 6 zugeführt und füllt diesen auf, gleichzeitig sinkt der Füllstand im Kaltspeicher 7. Im Falle eines flüssigen Wärmeträgermediums erfolgt über die Pendelleitung 14 ein Druckausgleich zwischen den Speichern 6, 7. Die allmähliche Abkühlung des Objekts 2 führt jedoch auch zu einer Abkühlung des Wärmeträgermediums und somit auch zu einer Abkühlung des Warmspeichers 6. Unterschreitet im Zuge der Zuführung des Wärmeträgermediums die Temperatur im Warmspeicher 6 den Wert T₁, wird das Steuerventil 9e geschlossen und das Stellventil 11 geöffnet. Nach Unterschreiten des Wertes T₂ für die am Temperatursensor 13 ermittelten Temperatur des Wärmeträgermediums wird das Stellventil 11 geschlossen und das Steuerventil 9e geöffnet; die Vorrichtung 1 tritt damit in den Betriebszustand "Kühlung" entsprechend der Fig. 2a.

Im vorgenannten Ausführungsbeispiel wurden die Betriebszustände im Falle eines flüssigen Wärmeträgermediums dargestellt. Kommt ein gasförmiges Medium zum Einsatz, tritt an die Stelle des Füllstandes im Kaltspeicher 7 bzw. Warmspeicher 6 der Druck, anstelle der Erhöhung des Füllstandes eine Druckerhöhung, anstelle einer Verringerung des Füllstandes eine Druckerniedrigung. Dementsprechend ist in diesem Falle das Leitungsnetzwerk 3 mit druckfesten Leitungen auszurüsten.

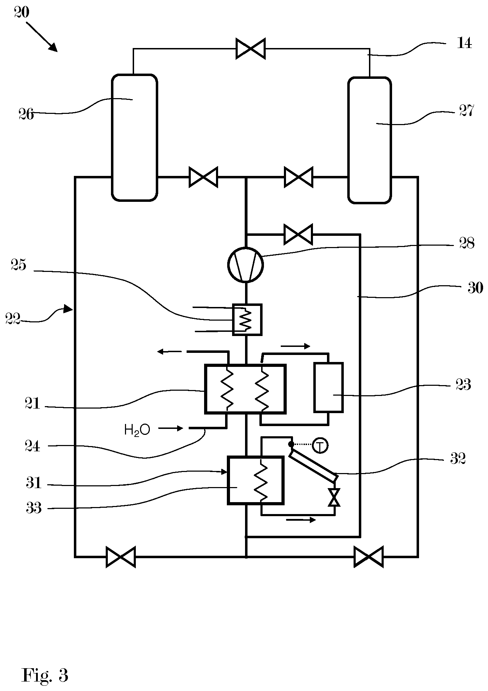

In Fig. 3 ist ein weiteres Ausführungsbeispiel für eine erfindungsgemäße Vorrichtung gezeigt.

Bei der in Fig. 3 gezeigten Vorrichtung 20 handelt es sich um eine Heizungsanlage mit integrierter solarthermischer Wärmeerzeugung zur Bereitstellung von Heizwärme mit einer Temperatur von z. B. 40°C einerseits und Warmwasser mit einer Temperatur von z.B. 60°C andererseits. Dazu ist ein zentraler Wärmetauscher 21 ("Objekt") im Leitungsnetzwerk 22 der Vorrichtung 20 vorgesehen, der über Wärmetauscherrohre einerseits mit einem Heizkreislauf 23 und andererseits mit einer Warmwasserversorgungsleitung 24 thermisch verbunden ist. Im Leitungsnetzwerk 22 ist ein Warmspeicher 26 sowie ein Kaltspeicher 27 integriert, wobei die Temperatur T₃ des im Warmspeicher 26 vorgehaltenen Wärmeträgermediums oberhalb der Solltemperatur T_{w} des Warmwasser und die Temperatur T₄ des im Kaltspeicher 27 vorgehaltenen Wärmeträgermediums oberhalb der Solltemperatur T_{H} im Heizkreislauf 23 gewählt wird (die Solltemperatur im Heizkreislauf ist dabei stets niedriger als die Solltemperatur des Warmwassers). Beispielsweise ist T₃ = 80°C und T₄ = 50°C. Stromauf zum Wärmetauscher 21 ist eine Heizeinrichtung 25 zum zusätzlichen Heizen des im Leitungsnetzwerk 22 geführten Wärmeträgermediums bei entsprechendem Bedarf vorgesehen. Weiterhin umfasst die Vorrichtung 20 - ähnlich wie die Vorrichtung 1 - eine Fördereinrichtung 28 und eine Bypassleitung 30. Zum Einspeisen von solarthermischer Energie ist ein Wärmetauscherkreislauf 31 vorgesehen, der das Leitungsnetzwerk 23 an einem Wärmetauscher 33 thermisch mit einem solarthermischen Kollektor 32 verbindet. Bei diesem Ausführungsbeispiel dient der mit dem Kollektor 32 ausgerüstete Wärmetauscherkreislauf 31 somit als Heizeinrichtung und die mit dem Wärmetauscher 21, also dem zu temperierenden Objekt, thermisch verbundenen Warmwasserversorgungsleitung 24 und der Heizkreislauf 23 als Kühleinrichtung.

In Zeiten starker Sonneneinstrahlung heizt der Kollektor 31 das Wärmeträgermedium im Wärmetauscherkreislauf 31 auf eine Temperatur T > T₃ auf. Das Leitungsnetzwerk wird in diesem Fall so geschaltet, dass das Wärmeträgermedium vom Wärmetauscher 33 zum Warmspeicher 26 geleitet wird. Der Warmspeicher 26 wird auf diese Weise mit Wärmeträgermedium der Temperatur T > T₃ aufgeladen. In Zeiten geringerer Sonneneinstrahlung vermag der Kollektor 32 das Wärmeträgermedium nur noch auf eine Temperatur aufzuheizen, die zwischen den Speichertemperaturen T₃ und T₄ liegt. In diesem Falle wird das Leitungsnetzwerk 22 so geschaltet, dass das Wärmeträgermedium vom Wärmetauscher 33 zum Kaltspeicher 27 geführt wird, wodurch der Kaltspeicher 27 mit Wärmeträgermedium der Temperatur T₃ > T > T₄ aufgeladen wird. In Zeiten noch geringerer Sonneneinstrahlung, in der das Wärmeträgermedium im Wärmetauscherkreislauf 31 vom Kollektor 32 nur noch auf Temperaturen T < T₄ aufgeheizt wird, wird der Wärmetauscherkreislauf 31 thermisch vom Leitungsnetzwerk 22 abgekoppelt.

Bei Bedarf von Brauchwasser (Warmwasser) mit einer Temperatur T_{w} mit T₃ > T_{w} > T₄ (beispielsweise ist T_{w}= 60°C) wird das im Warmspeicher 26 enthaltene Wärmeträgermedium zum Heizen des Warmwassers genutzt. Das gleiche gilt, wenn zusätzlich zum Warmwasserbedarf Heizbedarf am Heizkreislauf 23 (T_{H} = 40°C) besteht. Wird jedoch anschließend nur mehr Heizenergie und kein Warmwasser benötigt, genügt die Temperatur T ≥ T₄ des im Kaltspeicher 27 gespeicherten Wärmeträgermediums zum Heizen des Heizkreislaufs. In diesem Falle wird die Strömungsverbindung zwischen Warmspeicher 26 und dem Wärmetauscher 21 getrennt und zugleich eine Strömungsverbindung zwischen Kaltspeicher 27 und Wärmetauscher 21 hergestellt. Sofern der Wärmetauscher 21 dabei zu Anfang eine Temperatur von T > T₃ aufweist, wird auch das Wärmeträgermedium im Wärmetauscher 21 zunächst auf eine Temperatur von T > T₃ aufgeheizt. Solange dies der Fall ist, wird das Wärmeträgermedium anschließend zum Warmspeicher 26 geleitet und erhöht dessen Füllgrad. Sinkt im weiteren Verlauf die Temperatur des Wärmeträgermediums stromab zum Wärmetauscher 21 auf einen Wert T mit T < T₃ wird die Strömungsverbindung zwischen Wärmetauscher 21 und Warmspeicher 26 unterbrochen und eine Strömungsverbindung vom Wärmetauscher 21 zum Kaltspeicher 27 hergestellt und somit das Wärmeträgermedium im Kreislauf geführt. In einem weiteren Betriebszustand wird bei hinreichend starker Sonneneinstrahlung und gefüllten Speichern 26, 27 das Wärmeträgermedium im über die Bypassleitung 30 vom Wärmetauscherkreislauf 31 unmittelbar zwecks Beheizung von Brauch- und/oder Heizwasser zum Wärmetauscher 21 geführt.

Weiterhin kann bei Bedarf eine zusätzliche, beispielsweise elektrische Heizeinrichtung 25 zugeschaltet werden, wenn die jeweilige Heizaufgabe dies erfordert und weder die thermische Energie in den Speichern 26, 27, noch die solare Einstrahlung ausreicht, um diese zu lösen.

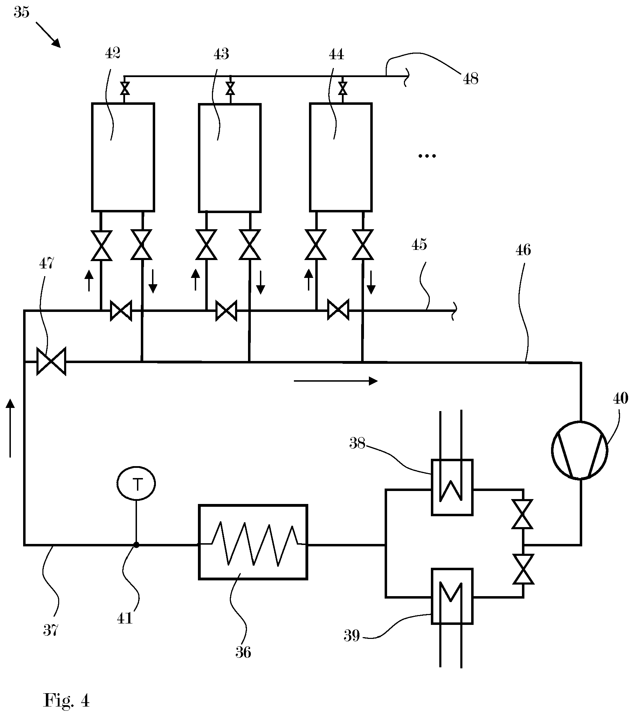

Bei der Ausführungsform nach Fig. 4 sind mehr als zwei Wärmespeicher im Einsatz. Die dort gezeigte Vorrichtung 35 umfasst - ähnlich wie die Vorrichtung 1 aus Fig. 1 - ein zu temperierendes Objekt 36, ein Leitungsnetzwerk 37 eine Heizeinrichtung 38 und eine Kühleinrichtung 39, wobei Heizeinrichtung 38 und Kühleinrichtung 39 - ähnlich wie Heizeinrichtung 4 und Kühleinrichtung 5 - wechselweise dem Leitungsnetzwerk 37 zugeschaltet werden können. Zum Fördern eines Wärmeträgermediums im Leitungsnetzwerk 37 ist eine Fördereinrichtung 40 vorgesehen. Eine Temperatur-Messeinrichtung 41 ermittelt die Temperatur des Wärmeträgermediums im Leitungsnetzwerk 37 stromab zum Objekt 36. Zum Speichern von Wärme sind eine Mehrzahl von Wärmespeichern 42, 43, 44 vorgesehen, die an gemeinsamen Zuleitungen 45, 46 an das Leitungsnetzwerk 37 angeschlossen sind, wobei mittels geeigneter Ventile die Strömungsverbindungen zwischen den Wärmespeichern 42, 43, 44 und den Zuleitungen 45, 46 jeweils unabhängig voneinander geöffnet oder getrennt werden können. Dabei führt eine Strömungsverbindung von der Zuleitung 45 mit einem Wärmespeicher 42, 43, 44 jeweils zu einem Zustrom an Wärmeträgermedium zum Wärmespeicher 52, 43, 44 und eine Strömungsverbindung eines Wärmespeichers 42, 43, 44 zur Zuleitung 46 zu einem Abstrom von Wärmeträgermedium aus dem Wärmespeicher 42,43,44. Ein Bypassventil 47 ermöglicht zudem die Nutzung der Zuleitung 46 als Bypassleitung zum Umgehen der Wärmespeicher 42, 43, 44. Eine Pendelgasleitung 48 ermöglicht bei Bedarf den Druckausgleich zwischen den Wärmespeichern 42, 43, 44. Es sei vermerkt, dass im Ausführungsbeispiel nach Fig. 4 lediglich drei Wärmespeicher gezeigt sind, jedoch noch weitere, hier nicht gezeigte Wärmespeicher in gleicher Weise wie die Wärmespeicher 42, 43, 44 an die Zuleitungen 45, 46 angeschlossen werden können; die im Folgenden skizzierte Funktionsweise der Vorrichtung 35 erstreckt sich entsprechend auch auf solche zusätzlichen Wärmespeicher.

Beim Betrieb der Vorrichtung 35 dient jeder der als Fluidspeicher ausgestalteten Wärmespeicher 42, 43, 44 zum Speichern von Wärme in einem vorgegebenen Temperaturintervall, wobei die vorgegebenen Temperaturintervalle jeweils unterschiedlich und aneinander angrenzend gewählt sind. So soll die Temperatur des Wärmeträgermediums im Wärmespeicher 42 im Intervall [T₁, T₂] liegen, die Temperatur des Wärmeträgermediums im Wärmespeicher 43 im Intervall [T₂, T₃] und die Temperatur des Wärmeträgermediums im Wärmespeicher 44 im Intervall [T₃, T₄], wobei T₁ > T₂ > T₃ >T₄ gelten soll. Das Objekt 36 weise zunächst eine Temperatur von T > T₁ auf und die Strömungsverbindungen der Wärmespeicher 42, 43, 44 mit den Zuleitungen 45, 46 seien getrennt.

Zum Kühlen des Objekts 36 wird zunächst eine Strömungsverbindung zwischen einem oder beiden der Wärmespeicher 43, 44 über die Zuleitung 46, die Fördereinrichtung 40, die Kühleinrichtung 39 (die gleichzeitig oder zu einem späteren Zeitpunkt zugeschaltet wird) das Objekt 36 und die Zuleitung 45 zum Wärmespeicher 42 hergestellt. Das durch das Objekt 36 geführte Wärmeträgermedium heizt sich dabei auf und verlässt das Objekt 36 zunächst noch mit einer Temperatur T > T₂, kühlt sich jedoch laufend ab. Sinkt die Temperatur des Objekts auf einen Wert in der Nähe von T₂, wird der Wärmespeicher 43 strömungstechnisch von der Zuleitung 46 getrennt und als Kühlmedium wird nur noch Wärmeträgermedium aus dem Wärmespeicher 44 verwendet.

Bei fortlaufender Kühlung des Objekts 36 sinkt zugleich auch die an der Messeinrichtung 41 erfasste Temperatur stromab zum Objekt 36 und unterschreitet schließlich die Temperatur T₂. Daraufhin wird die Strömungsverbindung des Wärmespeichers 42 mit der Zuleitung 45 getrennt und die Strömungsverbindung des Wärmespeichers 43 mit der Zuleitung 45 geöffnet. In diesem Betriebszustand strömt Wärmeträgermedium vom Wärmespeicher 44 über die Fördereinrichtung 40, die Kühleinrichtung 39 und das Objekt 36 zum Wärmespeicher 43. Sinkt die Temperatur des Objekts auf einen Wert in der Nähe von T₃, wird auch der Wärmespeicher 44 strömungstechnisch von der Zuleitung 46 getrennt und das Bypassventil 47 geöffnet. Ebenso wird der Wärmespeicher 43 strömungstechnisch von der Zuleitung 45 getrennt, sodass kein Wärmeträgermedium durch die Zuleitung 45 fließt; das Wärmeträgermedium strömt somit im Kreislauf von Fördereinrichtung 40, Kühleinrichtung 39 und Objekt 36, bis das Objekt 36 die vorgesehene Zieltemperatur von beispielsweise T<T₄ erreicht hat.

Beim Heizen des auf einer Temperatur T<T₄ vorliegenden Objekts 36 wird eine Strömungsverbindung von einem oder beiden der Wärmespeicher 42, 43 über die Zuleitung 46, die Fördereinrichtung 40, die Heizeinrichtung 37, das Objekt 36 und die Zuleitung 45 zum Wärmespeicher 44 hergestellt. Beim Heizvorgang des kalten Objekts 36 kühlt sich das Wärmeträgermedium auf eine Temperatur von zunächst T<T₃ ab, wärmt sich jedoch auf. Steigt die Temperatur des Objekts 36 auf einen Wert in der Nähe von T=T₃, wird die Strömungsverbindung zwischen dem Wärmespeicher 43 und der Zuleitung 46 getrennt. Erreicht das Wärmeträgermedium stromab zum Objekt 36 den Wert T=T₃, wird die Strömungsverbindung zwischen Zuleitung 45 und Wärmespeicher 44 getrennt und die Strömungsverbindung zwischen Zuleitung 45 und dem Wärmespeicher 43 geöffnet. Erreicht die Temperatur des Wärmeträgermediums stromab zum Objekt 36 einen Wert von T=T2, wird schließlich die Strömungsverbindung zwischen der Zuleitung 45 und dem Wärmespeicher 43 getrennt und die Strömungsverbindung zwischen der Zuleitung 45 und dem Wärmespeicher 42 geöffnet.

Auf diese Weise wird gewährleistet, dass in den Wärmespeichern 42, 43, 44 stets nur Wärmeträgermedium mit der Temperatur des jeweils vorgesehenen Temperaturintervalls gespeichert wird. Die in den Wärmespeichern 42, 43, 44 gespeicherte Wärme bzw. Kälte trägt bei der Umtemperierung des Objekts 36 wesentlich bei und verringert somit den Energieeinsatz beim Betrieb der Heizeinrichtung 38 bzw. Kühleinrichtung 39. Anstelle der Messung der an der Messeinrichtung 41 erfassten Temperatur kann im Übrigen auch die mittels geeigneter Messfühler erfassten Temperaturen des Wärmeträgermediums innerhalb der Wärmespeicher 42, 43, 44 herangezogen werden, um die vorgenannten Schaltungen zwischen den Wärmespeichern 42, 43, 44 vorzunehmen; über- oder unterschreitet also beim Kühl- oder Heizvorgang die Temperatur des Wärmeträgermediums in einem Wärmespeicher 42, 43, 44 dessen vorgegebenes Temperaturintervall, so wird dieser vom Leitungsnetzwerk 37 abgekoppelt und entsprechend Wärmespeicher 42, 43, 44 des jeweils benachbarten Temperaturintervalls zugeschaltet.

### Bezugszeichenliste

- 1: Vorrichtung
- 2: Objekt
- 3: Leitungsnetzwerk
- 4: Heizeinrichtung
- 5: Kühleinrichtung
- 6: Warmspeicher
- 7: Kaltspeicher
- 8: Fördereinrichtung
- 9a - 9 f: Steuerventile
- 10: Bypassleitung
- 11: Stellventil
- 12: Temperatursensor
- 13: Temperatursensor
- 14: Pendelgasleitung
- 15: -
- 16: -
- 17: -
- 18: -
- 19: -
- 20: Vorrichtung
- 21: Wärmetauscher
- 22: Leitungsnetzwerk
- 23: Heizkreislauf
- 24: Warmwasserversorgungsleitung
- 25: Heizeinrichtung
- 26: Warmspeicher
- 27: Kaltspeicher
- 28: Fördereinrichtung
- 29: -
- 30: Bypassleitung
- 31: Wärmetauscherkreislauf
- 32: Kollektor
- 33: Wärmetauscher
- 34: -
- 35: Vorrichtung
- 36: Objekt
- 37: Leitungsnetzwerk
- 38: Heizeinrichtung
- 39: Kühleinrichtung
- 40: Fördereinrichtung
- 41: T-Messeinrichtung
- 42: Wärmespeicher
- 43: Wärmespeicher
- 44: Wärmespeicher
- 45: Zuleitung
- 46: Zuleitung
- 47: Bypassventil
- 48: Pendelgasleitung

## Patentansprüche

1. Verfahren zum Umtemperieren eines Objekts (2, 21, 36) mittels eines in einem Leitungsnetzwerk (3, 22, 37) geführten Wärmeträgermediums, in welches Leitungsnetzwerk (3, 22, 37) eine Fördereinrichtung (8, 28, 40) zum Fördern des Fluids, eine Heizeinrichtung (4, 31, 38) und eine Kühleinrichtung (5, 23, 24, 39) zum Heizen bzw. Kühlen des Wärmeträgermediums sowie ein erster Wärmespeicher (6, 7, 26, 27, 42, 43, 44) und ein zweiter Wärmespeicher (6, 7, 26, 27, 42, 43, 44) zum Speichern von thermischer Energie integriert ist, wobei im ersten Wärmespeicher (6, 7, 26, 27, 42, 43, 44) eine Mindesttemperatur T₁ und im zweiten Wärmespeicher (6, 7, 26, 27) eine Höchsttemperatur T₂ aufrecht erhalten wird, mit T₁ ≥ T₂, **dadurch gekennzeichnet, dass**
- beim Kühlen des zuvor auf einer Temperatur von T > T₁ befindlichen Objekts (2, 21, 36) im Leitungsnetzwerk (3, 22, 37) zunächst eine Strömungsverbindung zwischen der Kühleinrichtung (5, 23, 24, 38), dem Objekt (2, 21, 36) und dem ersten Wärmespeicher (6, 7, 26, 27, 42, 43, 44) hergestellt wird, wobei das beim thermischen Kontakt mit dem Objekt (2, 21, 36) sich erwärmende Wärmeträgermedium so lange dem ersten Wärmespeicher (6, 7, 26, 27, 42, 43, 44) zugeführt wird, bis die Temperatur T₁ im ersten Wärmespeicher (6, 7, 26, 27, 42, 43, 44) unterschritten wird, und anschließend die Strömungsverbindung zum ersten Wärmespeicher (6, 7, 26, 27, 42, 43, 44) unterbrochen wird, und/oder
- beim Heizen des zuvor auf einer Temperatur von T < T₂ befindlichen Objekts (2, 21, 36) im Leitungsnetzwerk (2, 23, 37) zunächst eine Strömungsverbindung zwischen der Heizeinrichtung (4, 31, 39), dem Objekt (2, 21, 36) und dem zweiten Wärmespeicher (6, 7, 26, 27, 42, 43, 44) hergestellt wird, wobei das beim thermischen Kontakt mit dem Objekt (2, 21, 26) abkühlende Wärmeträgermedium so lange in thermischen Kontakt mit dem zweiten Wärmespeicher (6, 7, 26, 27, 42, 43, 44) gebracht wird, bis die Temperatur T₂ im zweiten Wärmespeicher (6, 7, 26, 27, 42, 43, 44) überschritten wird, und anschließend die Strömungsverbindung zum zweiten Wärmespeicher (6, 7, 26, 27, 42, 43, 44) unterbrochen wird.

2. Verfahren nach Anspruch 1, **dadurch gekennzeichnet, dass** das Wärmeträgermedium vor dem thermischen Kontakt mit dem Objekt (2, 21, 36)
- beim Kühlen des Objekts (2, 21, 36) zwecks Zuführen von kaltem Wärmeträgermedium in thermischen Kontakt mit dem zweiten Wärmespeicher (6, 7, 26, 27, 42, 43, 44) gebracht wird, und/oder
- beim Heizen des Objekts (2, 21, 36) zwecks Zuführen von warmem Wärmeträgermedium in thermischen Kontakt mit dem ersten Wärmespeicher (6, 7, 26, 27, 42, 43, 44) gebracht wird.

3. Verfahren nach Anspruch 1 oder 2, **dadurch gekennzeichnet, dass**
- beim Kühlen des Objekts (2, 21, 36) nach Unterbrechen der Strömungsverbindung zum ersten Wärmespeicher (6, 7, 26, 27, 42, 43, 44) eine Strömungsverbindung zum zweiten Wärmespeicher (6, 7, 26, 27, 42, 43, 44) hergestellt und das durch den Wärmetausch mit dem Objekt (2, 21, 36) erwärmte Wärmeträgermedium dem zweiten Wärmespeicher (6, 7, 26, 27, 42, 43, 44) zugeführt wird und/oder
- beim Heizen des Objekts (2, 21, 36) nach Unterbrechen der Strömungsverbindung zum zweiten Wärmespeicher (6, 7, 26, 27, 42, 43, 44) eine Strömungsverbindung zum ersten Wärmespeicher (6, 7, 26, 27, 42, 43, 44) hergestellt und das durch den Wärmetausch mit dem Objekt (2, 21, 36) gekühlte Wärmeträgermedium dem ersten Wärmespeicher (6, 7, 26, 27, 42, 43, 44) zugeführt wird.

4. Verfahren nach einem der vorhergehenden Ansprüche, **gekennzeichnet durch** den Einsatz zur zeitweiligen Aufheizung einer Apparatur zur Herstellung von Trockeneis, wobei T₁ oberhalb der Schmelztemperatur von Kohlendioxid und T₂ unterhalb der Schmelztemperatur von Kohlendioxid liegt.

## Claims

1. Method for adjusting the temperature of an object (2, 21, 36) by means of a heat carrier medium conducted in a line network (2, 22, 37), in which line network (3, 22, 37) a conveying device (8, 28, 40) for conveying the fluid, a heating device (4, 31, 38) and a cooling device (5, 23, 24, 39) for heating and cooling the heat carrier medium, and a first heat store (6, 7, 26, 27, 42, 43, 44) and a second heat store (6, 7, 26, 27, 42, 43, 44) for storing thermal energy are integrated, wherein a minimum temperature T₁ is maintained in the first heat store (6, 7, 26, 27, 42, 43, 44) and a maximum temperature T₂ is maintained in the second heat store (6, 7, 26, 27), with T₁ ≥ T₂, **characterized in that**,
- with the cooling of the object (2, 21, 36) in the line network (3, 22, 37), which object is at a temperature of T > T₁ beforehand, firstly a flow connection between the cooling device (5, 23, 24, 38), the object (2, 21, 36) and the first heat store (6, 7, 26, 27, 42, 43, 44) is established, wherein the heat carrier medium which heats up upon thermal contact with the object (2, 21, 36) is fed to the first heat store (6, 7, 26, 27, 42, 43, 44) until the temperature T₁ in the first heat store (6, 7, 26, 27, 42, 43, 44) is fallen below, and subsequently the flow connection to the first heat store (6, 7, 26, 27, 42, 43, 44) is interrupted, and/or,
- with the heating of the object (2, 21, 36) in the line network (2, 23, 37), which object is at a temperature of T < T₂ beforehand, firstly a flow connection between the heating device (4, 31, 39), the object (2, 21, 36) and the second heat store (6, 7, 26, 27, 42, 43, 44) is established, wherein the heat carrier medium which cools upon thermal contact with the object (2, 21, 26) is brought into thermal contact with the second heat store (6, 7, 26, 27, 42, 43, 44) until the temperature T₂ in the second heat store (6, 7, 26, 27, 42, 43, 44) is exceeded, and subsequently the flow connection to the second heat store (6, 7, 26, 27, 42, 43, 44) is interrupted.

2. Method according to Claim 1, **characterized in that**, prior to the thermal contact with the object (2, 21, 36), the heat carrier medium,
- with the cooling of the object (2, 21, 36), is brought into thermal contact with the second heat store (6, 7, 26, 27, 42, 43, 44) for the purpose of feeding of cold heat carrier medium, and/or,
- with the heating of the object (2, 21, 36), is brought into thermal contact with the first heat store (6, 7, 26, 27, 42, 43, 44) for the purpose of feeding of warm heat carrier medium.

3. Method according to Claim 1 or 2, **characterized in that**,
- with the cooling of the object (2, 21, 36), after the flow connection to the first heat store (6, 7, 26, 27, 42, 43, 44) is interrupted, a flow connection to the second heat store (6, 7, 26, 27, 42, 43, 44) is established and the heat carrier medium heated by way of the heat exchange with the object (2, 21, 36) is fed to the second heat store (6, 7, 26, 27, 42, 43, 44), and/or,
- with the heating of the object (2, 21, 36), after the flow connection to the second heat store (6, 7, 26, 27, 42, 43, 44) is interrupted, a flow connection to the first heat store (6, 7, 26, 27, 42, 43, 44) is established and the heat carrier medium cooled by way of the heat exchange with the object (2, 21, 36) is fed to the first heat store (6, 7, 26, 27, 42, 43, 44).

4. Method according to one of the preceding claims, **characterized by** the use for intermittent heating of an apparatus for producing dry ice, wherein T₁ is above the melting temperature of carbon dioxide and T₂ is below the melting point of carbon dioxide.

## Revendications

1. Procédé de régulation de la température d'un objet (2, 21, 36) au moyen d'un milieu caloporteur guidé dans un réseau de conduits (3, 22, 37), réseau de conduits (3, 22, 37) dans lequel sont intégrés un dispositif de transport (8, 28, 40) destiné à transport le fluide, un dispositif de chauffage (4, 31, 38) et un dispositif de refroidissement (5, 23, 24, 39) destinés à chauffer, respectivement refroidir, le milieu caloporteur et un premier accumulateur de chaleur (6, 7, 26, 27, 42, 43, 44) et un deuxième accumulateur de chaleur (6, 7, 26, 27, 42, 43, 44) destinés à stocker de l'énergie thermique, une température minimale T₁ étant maintenue dans le premier accumulateur de chaleur (6, 7, 26, 27, 42, 43, 44) et une température maximale T₂ étant maintenue dans le deuxième accumulateur de chaleur (6, 7, 26, 27), avec T₁ ≥ T₂, **caractérisé en ce que**
- lors du refroidissement de l'objet (2, 21, 36), se trouvant préalablement à une température T > T₁, dans le réseau de conduits (3, 22, 37), une liaison d'écoulement est tout d'abord établie entre le dispositif de refroidissement (5, 23, 24, 38), l'objet (2, 21, 36) et le premier accumulateur de chaleur (6, 7, 26, 27, 42, 43, 44), le milieu caloporteur chauffant au contact thermique avec l'objet (2, 21, 36) étant amené au premier accumulateur de chaleur (6, 7, 26, 27, 42, 43, 44) jusqu'à ce que la température T₁ dans le premier accumulateur de chaleur (6, 7, 26, 27, 42, 43, 44) soit franchie vers bas, puis la liaison d'écoulement au premier accumulateur de chaleur (6, 7, 26, 27, 42, 43, 44) étant interrompue et / ou
- lors du chauffage de l'objet (2, 21, 36), se trouvant préalablement à une température T < T₂, dans le réseau de conduits (2, 23, 37), une liaison d'écoulement est établie entre le dispositif de chauffage (4, 31, 39), l'objet (2, 21, 36) et le deuxième accumulateur de chaleur (6, 7, 26, 27, 42, 43, 44), le milieu caloporteur refroidissant au contact thermique avec l'objet (2, 21, 26) étant mis en contact thermique avec le deuxième accumulateur de chaleur (6, 7, 26, 27, 42, 43, 44) jusqu'à ce que la température T₂ dans le deuxième accumulateur de chaleur (6, 7, 26, 27, 42, 43, 44) soit franchie vers le haut, puis la liaison d'écoulement avec le deuxième accumulateur de chaleur (6, 7, 26, 27, 42, 43, 44) est interrompue.

2. Procédé selon la revendication 1, **caractérisé en ce que**, avant le contact thermique avec l'objet (2, 21, 36), le milieu caloporteur est amené
- en contact thermique avec le deuxième accumulateur de chaleur (6, 7, 26, 27, 42, 43, 44) lors du refroidissement de l'objet (2, 21, 36) en vue d'amener un milieu caloporteur froid et/ou
- en contact thermique avec le premier accumulateur de chaleur (6, 7, 26, 27, 42, 43, 44) lors du chauffage de l'objet (2, 21, 36) en vue d'amener un milieu caloporteur chaud.

3. Procédé selon la revendication 1 ou 2, **caractérisé en ce que**
- lors du refroidissement de l'objet (2, 21, 36) après l'interruption de la liaison d'écoulement avec le premier accumulateur de chaleur (6, 7, 26, 27, 42, 43, 44), une liaison d'écoulement est établie avec le deuxième accumulateur de chaleur (6, 7, 26, 27, 42, 43, 44) et le milieu caloporteur chauffé par l'échange thermique avec l'objet (2, 21, 36) est amené au deuxième accumulateur de chaleur (6, 7, 26, 27, 42, 43, 44) et/ou
- lors du chauffage de l'objet (2, 21, 36) après l'interruption de la liaison d'écoulement avec le deuxième accumulateur de chaleur (6, 7, 26, 27, 42, 43, 44), une liaison d'écoulement est établie avec le premier accumulateur de chaleur (6, 7, 26, 27, 42, 43, 44) et le milieu caloporteur refroidi par l'échange de chaleur avec l'objet (2, 21, 36) est amené au premier accumulateur de chaleur (6, 7, 26, 27, 42, 43, 44).

4. Procédé selon l'une des revendications précédentes, **caractérisé par** l'utilisation pour le chauffage temporaire d'un appareil de production de neige carbonique, T₁ étant supérieure à la température de fusion du dioxyde de carbone et T₂ étant inférieure à la température de fusion du dioxyde de carbone.
